Europäisches Patentamt

European Patent Office

Office européen des brevets

(11) Veröffentlichungsnummer: **0 433 555 A2**

## (12) EUROPÄISCHE PATENTANMELDUNG

(21) Anmeldenummer: 90116632.2

(51) Int. Cl.⁵: **G01B 11/16**

(22) Anmeldetag: 30.08.90

(30) Priorität: 18.12.89 DE 3941725

(43) Veröffentlichungstag der Anmeldung:
26.06.91 Patentblatt 91/26

(84) Benannte Vertragsstaaten:
**AT BE DE ES FR GB IT NL SE**

(71) Anmelder: **KRUPP ATLAS ELEKTRONIK GMBH**
**Postfach 44 85 45 Sebaldsbrücker**
**Heerstrasse 235**
**W-2800 Bremen 44(DE)**

(72) Erfinder: **Burggraf, Hubert, Dr. Dipl.-Phys.**
**Hoher Acker 6**
**W-2806 Oyten(DE)**
Erfinder: **Rathjen, Dirk, Dr. Dipl.-Phys.**
**Am Rüten 68**
**W-2800 Bremen 33(DE)**
Erfinder: **Krupka, René, Dipl.-Phys.**
**Kappelgasse 11**
**W-7070 Schwäbisch Gmünd(DE)**

(54) **Vorrichtung zum Erkennen von Deformationen auf Pressteilen.**

(57)
2.1 Minimale Deformationen auf Preßteilen sind vor dem Lackieren mit bloßem Auge nicht erkennbar. Sie werden durch manuelles Aufrauhen der Oberfläche sichtbar gemacht. Nachteilig ist dabei, daß die gesamte Oberfläche angegriffen wird.

2.2 Dieses Problem wird dadurch gelöst, daß das Preßteil mit Laserlicht beleuchtet und gestreute Anteile von einem positionsempfindlichen Fotoempfänger empfangen werden, der senkrecht zur Relativbewegungsrichtung des Preßteils angeordnet ist. Das Ausgangssignal des Fotoempfängers wird einer Frequenzanalyse zugeführt. Hochfrequente Anteile des Frequenzspektrums geben eine Deformation an.

2.3 Die Meßvorrichtung ist im Automobilbau vorteilhaft einsetzbar.

Fig. 1

EP 0 433 555 A2

Xerox Copy Centre

## VORRICHTUNG ZUM ERKENNEN VON DEFORMATIONEN AUF PRESSTEILEN

Die Erfindung betrifft eine Vorrichtung zum Erkennen von Deformationen auf Preßteilen auf Blech der im Oberbegriff des Anspruchs 1 genannten Art.

In der Autoindustrie werden lackierte Bleche aus dem Produktionsprozeß herausgenommen, wenn Deformationen in Form von minimalen Beulen oder Dellen auf dem entsprechenden Karosserieteil sichtbar sind. Diese Unebenheiten der Oberfläche sind vor dem Lackieren mit dem bloßen Auge nicht erkennbar, so daß ein Eingriff in den Produktionsprozeß vorher nicht möglich ist. Um schon vor dem Lackieren eine Auswahl treffen zu können, werden beispielsweise die entsprechenden Karosserieteile manuell mit einer Feile angerauht, so daß Deformationen für das Auge erkennbar werden, da ihre Oberfläche besonders rauh oder glatt geblieben ist. Dieses Verfahren ist sehr aufwendig und bringt zudem den Nachteil mit sich, daß die ganze Oberfläche nicht mehr glatt, sondern angerauht ist.

Eine Veränderung der Oberfläche wird bei einem Einsatz mit optischen Methoden vermieden. Aus der optischen Meßtechnik ist beispielsweise ein Meßverfahren bekannt, bei dem Rundungen oder Einbuchtungen einer Oberfläche durch optische Mittel in Form von Moiréstreifen sichtbar gemacht werden . Die zu untersuchende Oberfläche wird dabei über ein Gitter beleuchtet. Auf der Oberfläche gestreute Anteile werden über ein dem ersten Gitter angepaßtes zweites Gitter von einer Kamera empfangen. Rundungen der Oberfläche werden durch Höhenlinien deutlich, wobei ihre Dichte ein Maß für die Steigung der Rundung ist. Um Deformationen festzustellen müßte ein Istprofil mit einem Sollprofil verglichen werden. Dieses Verfahren wäre sehr aufwendig, da zwei Profile gleichzeitig ausgemessen werden müßten und eine anschließende automatische Detektion nur über eine aufwendige Bildverarbeitung der beiden Moiréstreifenmuster möglich wäre.

Es ist Aufgabe der vorliegenden Erfindung, eine Vorrichtung der im Oberbegriff genannten Art zum Erkennen von Deformationen auf Preßteilen zu schaffen, bei der ohne Referenzprofil und ohne Veränderung der Oberfläche des Preßteils eine Aussage darüber getroffen werden kann, ob das Preßteil außer einer gewünschten kontinuierlichen Krümmung Deformationen mit geringer Ausbuchtung aufweist.

Diese Aufgabe wird erfindungsgemäß durch die im Kennzeichenteil des Anspruchs 1 genannten Merkmale gelöst. Das eine Lichtquelle verlassende Licht wird auf die Oberfläche des Preßteils fokussiert oder das Preßteil wird von einem Laserstrahl eines Lasersenders auf einer Oberflächenlinie längs seiner Bewegungsrichtung beleuchtet. Ein Fotoempfänger, der senkrecht zur Bewegungsrichtung positionsempfindlich ist, gibt ein Ausgangssignal ab, das bei Auftreffen von Licht in seiner Mitte einen bestimmten Wert aufweist. Wenn das Licht oberhalb oder unterhalb der Mitte auftritt, ist sein Ausgangssignal größer oder kleiner. Bei einem ebenen Preßteil, das keine Deformationen aufweist, wird das gestreute Licht stets auf die Mitte des Fotoempfängers abgebildet. Bei einer Krümmung wird ein Ausgangssignal erzeugt, dessen zeitlicher Verlauf die Krümmung des Preßteils wiedergibt. Befindet sich auf der beleuchteten Oberflächenlinie eine Deformation in Form einer kleinen Delle, so weist auch der zeitliche Verlauf des Ausgangssignals des Fotoempfängers einen Einbruch oder eine Überhöhung also einen Wechselanteil auf. Dem Fotoempfänger ist eine Anordnung zur Frequenzanalyse nachgeordnet. Das Ausgangssignal hat die Frequenz "Null", wenn das Preßteil eben ist. Bei einer Krümmung des Preßteils werden niedrige Frequenzen verzeichnet, die die Krümmung des Preßteils wiedergeben. Bei Auftreten einer Deformation in Form einer Beule oder einer Delle treten weitere wesentlich höhere Frequenzanteile auf, da die Frequenz des Ausgangssignals der Ortsfrequenz des Preßteilprofils entspricht. Durch die hochfrequenten Anteile wird eine Deformationsanzeige angesteuert, die anzeigt, daß dieses Preßteil aus dem Produktionsfluß entfernt werden muß. Das Frequenzspektrum weist außerdem noch in großem Abstand zu den die Deformation kennzeichnenden Frequenzen Spektralanteile auf, die Auskunft über die Rauhheit der Oberfläche des Preßteils geben und zusätzlich eine Rauhheitsanzeige ermöglichen.

Die Vorteile der erfindungsgemäßen Vorrichtung nach Anspruch 1 zum Erkennen von Deformationen bestehen insbesondere darin, daß keine absolute Vermessung des Profils des Preßteils notwendig ist, da nur die Deformation selbst und nicht die Formgebung des Profils des Preßteils eine Anzeige hervorruft. Ein weiterer Vorteil besteht darin, daß keine Bildverarbeitung notwendig ist, sondern lediglich eine Frequenzanalyse des Ausgangssignals des positionsempfindlichen Fotoempfängers. Es ist kein Vergleich zwischen einem Soll- und einem Istprofil notwendig. Ein weiterer Vorteil besteht darin, daß die Deformationserkennung in Echtzeit mit einfachen elektronischen Standardbausteinen erfolgt, wobei als Lichtquelle und Fotoempfänger handelsübliche Komponenten verwendet werden können. Es handelt sich um ein inkohärentes optisches Meßverfahren, das dementsprechend robust aufgebaut werden kann. Weiterhin ist von Vorteil, daß die Oberfläche des Meßteils durch die erfindungsgemäße Vorrichtung nicht berührt oder beschädigt wird.

Nach der vorteilhaften Weiterbildung der erfindungsgemäßen Vorrichtung nach Anspruch 2 wird einer Krümmung des Preßteils Rechnung getragen, so daß nicht nur ebene Preßteile, sondern auch Preßteile mit runder Formgebung überprüft werden können. Die Krümmung des Preßteils ist stets wesentlich geringer als die durch eine Delle hervorgerufene Deformation, so daß das Frequenzspektrum des Ausgangssignals nur Frequenzen unterhalb einer Grenzfrequenz aufweist. Die Steigung der Oberflächenform des Preßteils wird bei einer Deformation wesentlich verändert. Die Oberfläche weist nicht mehr einen kontinuierlichen Gradienten gleichen Vorzeichens auf, sondern Wendepunkte, die zu einer Veränderung des zeitlichen Verlaufs des Ausgangssignals führen. Das Frequenzspektrum des Ausgangssignals enthält bei Deformation der Oberfläche höherfrequente Anteile. Die Grenzfrequenz, ab der eine Deformationsanzeige erwünscht ist, liegt in einem wesentlichen Abstand von der durch die Krümmung hervorgerufenen niederfrequenten Anteile. Je größer jedoch die Krümmung oder die Steigungsvariation der Oberflächenform des Preßteils ist, desto höher muß die Grenzfrequenz gelegt werden. Vorteilhaft wird die Grenzfrequenz mit der erfindungsgemäßen Vorrichtung ausgemessen, indem der Anordnung zur Frequenzanalyse eine entsprechende Frequenzanzeige nachgeordnet ist. So ist die erfindungsgemäße Vorrichtung jeweils an das zu überprüfende Preßteil leicht anpaßbar, ohne daß vorher theoretische Überlegungen angestellt werden müssen.

Statt zur Frequenzanalyse eine Rechenschaltung zur Fouriertransformation zu verwenden, wird bei sich stets wiederholenden Prüfungen gleichgeformter Preßteile gemäß der vorteilhaften Weiterbildung der erfindungsgemäßen Vorrichtung nach Anspruch 3, ein einfacher Hochpaß eingesetzt, dessen Grenzfrequenz an die Krümmung des Preßteils angepaßt ist.

Wenn nicht nur die Tatsache der Deformation, sondern auch ihre Tiefe von Interesse ist, so wird nach der vorteilhaften Weiterbildung der erfindungsgemäßen Vorrichtung nach Anspruch 4 mit einer der Anordnung der Frequenzanalyse nachgeordneten Amplitudendetektor ein Maß für die Tiefe der Deformation gewonnen.

Für die Messung ist es notwendig, daß zwischen den optischen Komponenten und dem zu überprüfenden Preßteil eine Relativbewegung vorliegt, wodurch das gesamte Preßteil überprüft wird. Besonders einfach ist es, das Preßteil auf seinem Fertigungsband zu belassen und Lasersender und Fotoempfänger stationär anzuordnen, wie in Anspruch 5 angegeben.

Bei besonders großen Preßteilen ist es oft problematisch, das Preßteil zu bewegen. Gemäß der vorteilhaften Weiterbildung der erfindungsgemäßen Vorrichtung nach Anspruch 6 wird der Laserstrahl entlang der zu untersuchenden Oberflächenlinie geschwenkt. Die dabei auftretende laterale Verschiebung des gestreuten Lichts wird durch eine vor dem Fotoempfänger vorgesehene Zylinderoptik aufgehoben. Der Vorteil besteht insbesondere darin, daß die gesamte Vorrichtung stationär ist und die Relativbewegung durch das Schwenken des Laserstrahls hervorgerufen wird, die wesentlich schneller als eine mechanische Bewegung vorgenommen werden kann, so daß die Prüfdauer wesentlich geringer wird.

Mit der vorteilhaften Weiterbildung der erfindungsgemäßen Vorrichtung nach Anspruch 7 ist eine flächenhafte Untersuchung des Preßteils möglich. Der notwendige Mehraufwand wird durch die Meßgeschwindigkeitserhöhung ausgeglichen. Der Lasersender kann hier zum Ausleuchten einer Linie durch Vorschalten eines Hologramms punktfömig nebeneinander das Preßteil beleuchten. Die geometrische Zuordnung der reflektierten Anteile erfolgt durch die Anordnung der positionsempfindlichen Fotoempfänger.

Die Erfindung ist anhand von in der Zeichnung dargestellten Ausführungsbeispielen für eine Vorrichtung zum Erkennen von Deformationen auf Preßteilen im folgenden näher beschrieben.

Es zeigen:

Fig. 1     eine Meßvorrichtung zum linienförmigen Abtasten eines zu überprüfenden Preßteils und

Fig. 2     ein Ausgangssignal und

Fig. 3     eine Variante zum flächenhaften Untersuchen des Preßteils.

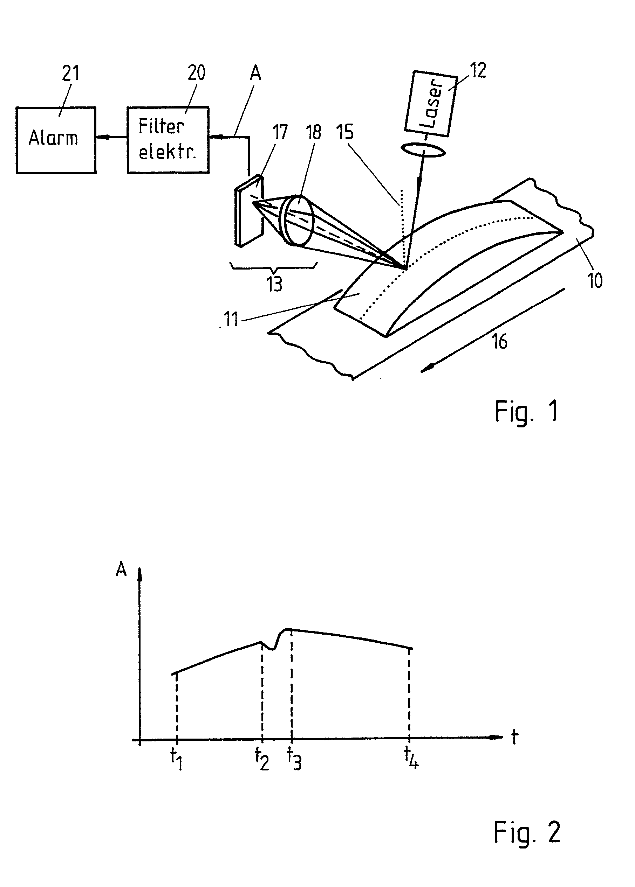

Auf einem Förderband 10 befindet sich gemäß Fig. 1 ein gewölbtes Preßteil 11 aus Blech, das unter einem Lasersender 12 und einem Empfänger 13 vorbeibewegt wird. Der Lasersender 12 beleuchtet einen Punkt des Preßteils 11, gestreute Anteile des Laserlichts werden vom Empfänger 13 empfangen. Lasersender 12 und Empfänger 13 sind stationär angeordnet. Ein Ausgangssignal A des Empfängers 13 ist abhängig von der Lage des ihn beleuchtenden Lichtstrahls. Ein um seine Mitte oszillierender Lichtstrahl erzeugt als Ausgangssignal eine Wechselspannung ggfs. mit Gleichanteil. Der Empfänger 13 ist bezüglich der Senkrechten 15 zur Bewegungsrichtung 16 so angeordnet, daß gestreutes Licht auf die Mitte eines positionsempfindlichen Fotoempfängers 17 mit einer Optik 18 gebündelt wird, wenn das Streulicht von einem Punkt der Oberfläche stammt, der auf halber Höhe des gewölbten Preßteils 11 liegt.

Fig. 2 zeigt den zeitlichen Verlauf eines Ausgangssignals des Fotoempfängers 17. Die Prüfung des Preßteils 11 beginnt zum Zeitpunkt $t_1$. Das Ausgangssignal zeigt eine konstante Steigung bis zum Zeitpunkt $t_2$, da das Preßteil 11 im ersten Bereich eine Schrägung mit konstanter Steigung aufweist. Zwischen den Zeitpunkten $t_2$ und $t_3$ beleuchtet der Laserstrahl des Lasersenders 12 eine Deformation, die dem Verlauf des Ausgangssignals unmittelbar zu entnehmen ist. Das Preßteil 11 ist zum Zeitpunkt $t_4$ längs einer Oberflächenlinie geprüft worden. Genauso ist es möglich, den Laserstrahl zu schwenken und so die Oberfläche abzutasten. Die Optik 18 weist dann zusätzliche zylindrische Komponenten auf.

Das Ausgangssignal A wird in einer Anordnung 20 zur Frequenzanalyse bezüglich seines Frequenzspektrums untersucht. Es weist in der Zeit von $t_1$ bis $t_2$ niedrige Frequenzen und die Frequenz "Null" auf. Hochfrequente Anteile sind zwischen den Zeitpunkten $t_2$ und $t_3$ zu verzeichnen. In der Zeit von $t_3$ bis $t_4$ weist das Frequenzspektrum wieder niederfrequente Anteile auf. Die Anordnung 20 zur Frequenzanalyse ist ein Hochpaß, dem eine Schwellenschaltung als Deformationsanzeige 21 nachgeordnet ist. Bei hochfrequenten Anteilen im Ausgangssignal A wird ein Alarm gegeben und das Preßteil 11 aus dem Produktionsprozeß herausgenommen. Zur Tiefenbestimmung der Deformation enthält die Deformationsanzeige 21 einen Amplitudendetektor mit Anzeige.

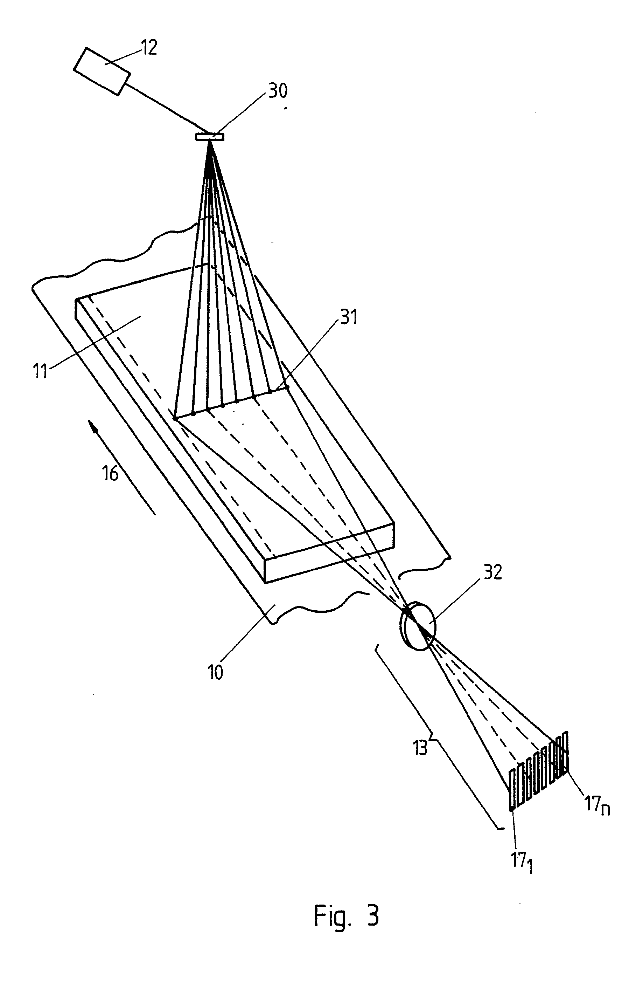

Fig. 3 zeigt eine alternative Anordnung zum Erkennen von Deformationen, bei der das Preßteil 11 auf dem Förderband 10 flächig geprüft wird. Dem Lasersender 12 ist ein holographic optical element 30 nachgeordnet, mit dem eine gleichzeitige, punktförmige Beleuchtung des Preßteils 11 längs einer Linie 31 bewirkt wird. Das holographic optical element 30 ist ein Hologramm, auf dem ein Wellenfeld einer Anzahl von n Lichtstrahlen gespeichert ist. Zur Rekonstruktion wird das holographic optical element 30 von der Laserquelle 12 beleuchtet und liefert ein reelles und virtuelles Bild, wobei das reelle Bild das Preßteil 11 beleuchtet. Die längs der Linie 31 gestreuten Anteile der n Lichtstrahlen werden über eine Linse 32 von einer Vielzahl positionsempfindlicher Fotoempfänger 171 bis 17n empfangen. Die Linse 32 und die Fotoempfänger 171 bis 17n bilden den Empfänger 13. Die Ausgangssignale der Fotoempfänger 171, 17n werden beispielsweise in einer Rechenschaltung zur Ermittlung der Fouriertransformierten als Anordnung 20 zur Frequenzanalyse ausgewertet und einer Deformationsanzeige zugeführt, wie nicht weiter dargestellt. Hier würde man keinen Hochpaß verwenden, da beim heutigen Stand der Rechnertechnik eine parallele Signalverarbeitung der Ausgangssignale der Fotoempfänger 171, ..., 17n schnell und kostengünstig durchführbar ist.

**Ansprüche**

1. Vorrichtung zum Erkennen von Deformationen auf Preßteilen aus Blech mit einer Lichtquelle, die das Preßteil beleuchtet und einem Empfänger zum Empfangen gestreuter Anteile, wobei Lichtquelle und Empfänger in bekanntem Abstand zueinander fest angeordnet sind und eine Relativbewegung zum Preßteil aufweisen, dadurch gekennzeichnet, daß der Empfänger (13) einen senkrecht zur Bewegungsrichtung positionsempfindlicher Fotoempfänger (17) enthält, daß sein Ausgang mit einer Anordnung (20) zur Frequenzanalyse verbunden ist, daß bei Auftreten von Frequenzen oberhalb einer Grenzfrequenz eine nachgeordnete Deformationsanzeige (21) ansteuerbar ist.

2. Vorrichtung nach Anspruch 1, dadurch gekennzeichnet, daß die Grenzfrequenz der Krümmung des Preßteils (11) anpaßbar ist und um so niedriger je geringer die Krümmung ist.

3. Vorrichtung nach Anspruch 1 oder 2, dadurch gekennzeichnet, daß die Anordnung (20) zur Frequenzanalyse ein Hochpaß ist.

4. Vorrichtung nach einem der Ansprüche 1 bis 3, dadurch gekennzeichnet, daß der Anordnung (20) zur Frequenzanalyse ein Amplitudendetektor nachgeordnet ist.

5. Vorrichtung nach einem der Ansprüche 1 bis 4, dadurch gekennzeichnet, daß Lichtquelle (12) und Empfänger (13) stationär sind.

6. Vorrichtung nach einem der Ansprüche 1 bis 4, dadurch gekennzeichnet, daß das Preßteil (11) und der Empfänger (13) stationär sind, daß ein Laserstrahl eines Lasersenders als Lichtquelle (12) entlang jeder zu untersuchenden Oberflächenlinie des Preßteils (11) schwenkbar ist und daß vor dem Fotoempfänger (17) eine Optik (18) mit zylindrischen Komponenten angeordnet ist.

7. Vorrichtung nach einem der Ansprüche 1 bis 6, dadurch gekennzeichnet, daß zur gleichzeitigen flächenhaften Untersuchung des Preßteils (11) ein Lasersender als Lichtquelle (12) zum Ausleuchten einer Linie (31) quer zur Bewegungsrichtung (16) des Preßteils (11) oder der Schwenkbewegung des beleuchtenden Laserstrahls ausgebildet ist und der Empfänger (13) aus einer Vielzahl (n) quer zur Bewegungsrichtung (16) nebeneinander angeordneten und senkrecht zur Bewegungsrichtung (16) und zur Linie (31) positionsempfindlichen Fotoempfängern (171, ..., 17n) ausgebildet ist.

Fig. 1

Fig. 2

Fig. 3